# EUROPÄISCHE PATENTANMELDUNG

(11) **EP 2 417 850 A2**
(43) Veröffentlichungstag der Anmeldung: **15.02.2012**
(21) Anmeldenummer: 11001942.9
(22) Anmeldetag: 09.03.2011
(51) Int. Cl.: A01G 13/10, A01M 29/30

(54) **Schneckenzaun**

(30) Priorität: 11.08.2010 DE 202010011274 U
(71) Anmelder: Haas, Michael, 88285 Bodnegg/-Rotheidlen (DE); Haas, Daniel, 88285 Bodnegg/-Rotheidlen (DE)
(72) Erfinder: Haas, Michael, 88285 Bodnegg-Rotheidlen (DE)
(74) Vertreter: Riebling, Peter

(57) **Zusammenfassung**

Die Erfindung betrifft einen Schneckenzaun (1; 1 a) aus einem bandförmigen Kunststoffträger (2), auf dessen Breitseite (18, 19) im Randbereich der oberen Schmalseite (6) mindestens ein Kupfer-Folienband (7; 7a) aufgebracht ist, **dadurch gekennzeichnet**, dass das mindestens eine Kupfer-Folienband (7; 7a) über mindestens eine Nähnaht (8) eines Garnes aufgenäht ist. Aufgabe ist es, dass der Schneckenzaun kostengünstig, einfach in der Montage, hochwirksam, wartungsarm, und dauerhaft ist. (Fig. 1).

## Beschreibung

Die Erfindung betrifft einen Schneckenzaun nach dem Oberbegriff des Schutzanspruchs 1.

Derartige Schneckenzäune sind zahlreich aus dem Stand der Technik bekannt, die aber allesamt den Nachteil aufweisen, dass sie entweder kosten-, montage- und wartungsintensiv sind oder aber relativ wirkungslos sind oder gar beides.

Ein kostengünstiger Schneckenzauntyp besteht aus Metall oder Kunststoff, über den die Schnecken nicht kriechen können. Nach dem Erklimmen des ca. 10 cm hohen Zaunes, der bis zu 10 cm tief im Erdreich vergraben werden sollte, stürzen sie an einem abgewinkelten Stück ab, die Schnecken werden dabei nicht verletzt. Überhängende Pflanzentriebe und -blätter, durch die die Schnecken den Zaun überwinden können, müssen allerdings entfernt werden.
Eine anderer Typ ist der Elektrozaun. Während des Erklimmens dieses Zaunes bekommen die Schnecken einen Elektroschock, den sie bei Niederspannung überleben. Der Nachteil dieses Zaunes ist die notwendige Wartung, außerdem muss immer Strom vorhanden sein. Der Strom kann durch eine anzuschließende Batterie geliefert werden. Ein weiterer sehr großer Nachteil ist, dass die Kontakte nach einem Regen sehr schnell mit Erdreich bedeckt werden und dann keinen Schutz mehr bieten. Außerdem können Kurzschlüsse entstehen, durch die der Zaun seine Wirkung verliert.

Die Schnecke muss dabei über einen oder mehrere elektrische Leiter kriechen, um in den abgeschirmten Bereich des Gartens zu gelangen. Dabei kann die elektrische Spannung für die elektrischen Leiter aus einer Batterie oder dem 220-V-Netz kommen oder aber die elektrischen Leiter bilden selbst ein galvanisches Element, so dass sich zwischen ihnen eine Kontaktspannung auf Grund des unterschiedlichen Potenzials in der elektrochemischen Spannungsreihe des Metallpaares bzw. deren elektromotorischen Kraft (EMK) aufbaut.

So offenbart die DE 4432325 A1 einen Schneckenzaun aus einer Kunststoffleiste, auf welcher zwei oder mehrere Bleche mit genügendem Abstand auf der elektrochemischen Spannungsreihe (z.B. aus Kupfer und Zink) angebracht sind, welche bei überbrückender Berührung durch eine Schnecke entweder galvanische Elektrizität freisetzt oder aber mit einer Spannungsquelle verbunden ist, wobei zwei oder mehrere nicht leitende Stege zwischen den Blechen eine nicht beabsichtigte Überbrückung durch Wasser oder Krume verhindern. Ein Regenschutz aus einer schalen- oder rechteckförmigen über den Blechen gewölbten Ausformung der Kunststoffleiste sowie eine evtl. Standfläche am erdnahen Teil der Leiste bilden eine sichere Isolation, ansonsten wird der Zaun durch Kunststoffstifte am Boden befestigt.

Die DE 202008011045 U1 offenbart einen elektrischen Schneckenzaun, wobei auf einer nicht-stromleitenden Trägerfolie von 15-20 cm Breite zwei stromleitende Bänder im Abstand von 2-2,5 cm aufklebt sind. Der Strom fließt über das obere Stromband über eine die beiden Strombänder überbrückende Schnecke zum unteren Stromband und von dort über einen Erdungsspieß in die Erde. Das obere Stromband ist vom oberen Rand der Trägerfolie weit beabstandet, das untere Stromband liegt bündig auf dem unteren Rand der Trägerfolie.

Die DE 102005032677 A1 offenbart einen elektrischen Schneckenzaun, wobei auf einem Träger aus Acryl zwei voneinander beabstandete elektrische Drähte z.B. aus Kupfer angebracht sind. Die Funktionsweise ist ähnlich wie bei der DE 202008011045 U1, nur dass hier eine sehr hohe Stromstärke von angeblich 6 Ampere angegeben sind, was sehr gefährlich für Mensch und Haustier sein kann und damit unerwünscht ist.

Die DE 19831790 A1 offenbart einen Schneckenzaun aus Messingblech mit 40-80% Kupfer und 20-60% Zink,sowie 0,5-10% Blei, wobei das Blech 0,3-0,5 mm dick, 10-15 cm hoch und 0,6-2 m lang ist und mittels Stabilisierungsstäben stehend auf dem Erdreich befestigt werden kann. Nachteil ist, dass das sehr dünne Blech anfällig gegen Beschädigung ist, schwierig mittels Stabilisierungsstäben zu montieren ist, relativ teuer ist, da es 10-15 cm hoch ist und zudem Stabilisierungsstäbe nötig sind, die entweder ebenfalls aus der identischen teuren Messinglegierung gefertigt sein müssen oder aber Korrosionsschäden im Laufe der Zeit auftreten, wegen der unterschiedlichen Potenzial in der elektrochemischen Spannungsreihe der beiden Metalle. Das Messingblech wird nicht ins Erdreich eingelassen, sondern liegt nur darauf auf, so dass die Gefahr besteht dass sich das Blech vom Erdboden abhebt und damit ein Durchgang für Schnecken geschaffen wird. Um ein Überklettern zu vermeiden, wird vorgeschlagen, eine lichtundurchlässige Folie horizontal auf den Boden zu legen, angrenzend an das Blech und außerhalb des geschützten Bereiches des Gartens, damit dort Pflanzenwachstum verhindert wird.

Die DE 19944240 A1 offenbart einen Schneckenzaun aus oxidiertem Kupferblech mit einer Dicke zwischen 0,4-0,7 mm und einer Höhe zwischen 20-30 cm, an dessen unterem Ende ein Edelstahlblech mit einer Dicke zwischen 0,4-0,5 mm und einer Höhe zwischen 5-7 cm durch Nieten oder Löten angebracht ist, welches für das Einstecken in den Erdboden vorgesehen ist. Nachteil ist hier wiederum, dass sehr teure Materialien verwendet werden, dass das Kupferblech und das Edelstahlblech aufwändig durch Nieten oder Löten miteinander verbunden werden müssen und dass zwischen Kupferblech und Edelstahlblech Korrosion auftritt, da diese beiden Metalle unterschiedliches Potenzial in der elektrochemischen Spannungsreihe besitzen.

Die DE 29906361 U1 offenbart einen Schneckenzaun aus Zinckblech einer Höhe von 30 cm und einer Stärke von 1 mm, an dessen oberem Ende ein Streifen aus Kupferblech einer Höhe von 5 cm und einer Stärke von 0,7 mm befestigt ist. Die Schnecken sollen dadurch abgehalten werden, den Zaun zu überkriechen, da die beiden Metalle Zinck und Kupfer Elektroden bilden und ein dazwischen befindlicher Schneckenkörper wie ein Elektrolyt wirkt, so dass ein elektrischer Strom fließt, welcher der Schnecke einen "Elektroschock" abgibt. Nachteil sind hier wiederum die recht teuren Metalle, sowie teuren oder nicht dauerhaltbaren Verbindungsmethoden zwischen den beiden Metallen, aber auch die Korrosion zwischen diesen beiden Metallen, wegen deren unterschiedlichem Potenzial in der elektrochemischen Spannungsreihe.

Die Nachteile dieser Ausführungen nach dem bekannten Stand der Technik will die vorliegende Erfindung nun vermeiden, so dass der erfindungsgemäße

Schneckenzaun kostengünstig, einfach in der Montage, hochwirksam, wartungsarm, und dauerhaft sein soll.

Diese Aufgaben werden durch die Merkmale der Schutzansprüche 1 gelöst.

Vorteilhafte Weiterbildungen sind Gegenstand der abhängigen Ansprüche.

Wesentliches Merkmal des erfindungsgemäßen Schneckenzaunes ist, dass am oberen Rand entlang einer oder beider Längsseiten des Kunststoffträgers mindestens ein Kupfer-Folienband aufgenäht ist.

Vorteil dabei ist, dass sowohl der relativ dünnschichtige Kunststoffträger (ca. 0,5 bis 5 mm), als auch das dünne Kupfer-Folienband (ca. 0,1 bis 0,5 mm) jeweils von einer Spule abgewickelt werden können und somit eine automatisierte Fertigung mit kostengünstigem Aufnähen des Kupfer-Folienbandes auf dem Kunststoffträger ermöglicht wird. Zudem ist die Wirkungsweise des Schneckenzaunes dadurch verbessert, da ein "Übersteigen" der Schnecken des Kupfer-Folienbandes vermieden wird, weil das Band am oberen Rand des Kunststoffträgers angenäht ist und die Schnecke über dem Kupfer-Folienband keine Freifläche vorfinden kann. Die die Schnecken abschreckende Wirkungsweise von Kupfer ist bereits aus dem Stand der Technik bekannt, kann aber wissenschaftlich nicht exakt erklärt werden. Es bedarf daher keines Stromflusses durch zwei elektrische Leiter, weder auf Grund einer elektrischen Spannung einer Batterie oder des 220-V-Netzes, noch auf Grund der EMK der beiden elektrischen Leiter selbst. Weiterer Vorteil ist die hohe Umweltverträglichkeit, da nur sehr wenig Kupfer verwendet werden muss, was insbesondere in Bio-Nutzgärten erwünscht ist.

Weiterer Vorteil ist, dass der erfindungsgemäße Schneckenzaun sehr flexibel ist und er daher sehr einfach in Radien und Kurven verlegt werden kann, wobei er auch als geschlossener Kreis, Oval und Vieleck gestaltbar ist. Es sind hierbei keine zusätzlichen Eckteile nötig, da die Ecken in Form von engen bzw. kleinen Radien verlegt werden. Das Ablängen des Schneckenzauns kann mit einer haushaltsüblichen Schere erfolgen, so dass hierzu keine Säge nötig ist.

Das Verbinden des Kupfer-Folienbandes mit dem Kunststoffträger soll kostengünstig erfolgen. Damit scheiden Schweißen und Nieten als Verbindungsverfahren aus. Kleben oder Klemmen sind keine dauerhafte Verbindungen zwischen Kunststoff und Metall, so dass auch diese Verbindungsverfahren ausscheiden. Gewählt wird daher ein Vernähen, welches sehr gut automatisierbar ist, bevorzugt mittels eines Kunststoffgarns, z.B. aus Polyester.

Das Kupfer-Folienband kann aus reinem bzw. nahezu reinem Kupfer bestehen oder aber aus einer beliebigen Kupfer-Legierung. Die Dimensionen des Kupfer-Folienbandes liegen bei einer Dicke zwischen 0,1 und 0,5 mm und einer Höhe zwischen 10 und 30 mm, wobei die Länge sich ununterbrochen über den gesamten Kunststoffträger erstreckt. Damit bleibt der Anteil an kostenintensivem Kupfer im Schneckenzaun relativ gering, aber die Abschreckwirkung des Kupfers gegenüber Schnecken immer noch genügend groß.

Der Kunststoffträger besteht bevorzugt aus Polyethylen (PE), könnte aber durchaus auch aus anderen dauerhaltbaren flexiblen Kunststoffen gefertigt sein, die eine erhöhte UV-Beständigkeit aufweisen. Die Dimensionen des Kunststoffträgers liegen bei einer Dicke zwischen 0,5 und 5 mm und einer Höhe zwischen 10 und 25 cm, wobei die Länge zwischen 1 und 5 m für gerade Stücke liegt oder zwischen 10 und 50 m für aufgewickelte Spulen liegt. Damit wird ein kostengünstiger Träger bereit gestellt. Die untere Hälfte des Kunststoffträgers wird im Übrigen in das Erdreich eingebracht, die obere Hälfte mit dem am oberen Rand befindlichen Kupfer-Folienband ragt dann selbsttragend aus dem Erdreich heraus und bildet den Abwehrwall gegen Schnecken. Bei einer Dicke zwischen 0,5 und 1 mm ist der folienartige Kunststoffträger nicht stabil genug, um selbsttragend zu sein, und muss daher durch separate Stützmittel gehalten werden, z.B. durch Anlehnen an einen vorhandenen Zaun oder Steine oder aber zusätzliche Heringe, die in den Erdboden gesteckt werden.

Die Relativlage zwischen dem Kupfer-Folienband auf dem Kunststoffträger ist nicht beliebig gewählt, sondern das Kupfer-Folienband ist im Bereich des oberen rasenfernen Randes des Kunststoffträger vorgesehen. Damit wird ein "Übersteigen" des Kupfer-Folienbandes durch die Schnecke verhindert, da keine oder kaum Trägerfläche oberhalb des Kupfer-Folienbandes vorhanden ist, auf dem die Schnecke weiter Richtung abgeschirmter Gartenzone kriechen könnte. Demnach bleibt die Schnecke stets unterhalb des Kupfer-Folienbandes und damit außerhalb der abgeschirmten Gartenzone.

Das Kupfer-Folienband kann dabei entweder auf einer einzigen Längsseite des Kunststoffträgers oder auf beiden Längsseiten des Kunststoffträgers angenäht sein.

In einer Weiterbildung können mehrere Kupfer-Folienbänder aufgenäht werden, entweder auf einer Längsseite des Kunststoffträgers oder aber zu beiden Längsseiten des Kunststoffträgers. Wichtig dabei ist, dass diese im Wesentlichen mit nur einem einzigen Durchgang einer Nähmaschine angenäht werden, so dass die Herstellung schnell und kostengünstig erfolgt.

Werden Kupfer-Folienbänder auf beiden Längsseiten des Kunststoffträgers aufgenäht, so können diese in einer Weiterbildung miteinander über eine horizontale Brücke über die obere Schmalseite des Kunststoffträgers verbunden sein, so dass z.B. ein einziges Kupfer-Folienband über die obere Schmalseite des Kunststoffträgers übergestülpt und vertikal durchgenäht ist.

Werden auf einer Längsseite des Kunststoffträgers mehrere Kupfer-Folienbänder vorgesehen, so sind diese immer im oberen Randbereich des Kunststoffträgers angenäht und haben einen nur geringen gegenseitigen Abstand, damit die Schnecken keine Flächen zum Zwischendurchkriechen finden können. Die mehreren Kupfer-Folienbänder sind dabei horizontal in Richtung der Hochachse des Kunststoffträgers und/oder vertikal in Richtung der Längsachse des Kunststoffträgers angeordnet.

Natürlich können die sehr dünnen Kupfer-Folienbänder zur besseren Verarbeitung selbst auf einer Kunststoffträgerfolie aufgebracht sein, z.B. durch Verkleben. Die auf dieser Kunststoffträgerfolie aufgeklebten Kupfer-Folienbänder werden dann zusammen auf den stabilen, den eigentlichen Zaun bildenden Kunststoffträger im oberen Randbereich aufgenäht, so dass die Verklebung zwischen den Kupfer-Folienbändern und deren Kunststoffträgerfolie nicht dauerhaft sein muss, sondern nur solange halten muss, bis das Annähen auf dem Kunststoffträger erfolgt ist.

Im Folgenden wird die Erfindung an Hand zweier beispielhaften Ausführungsformen näher erläutert.

Es zeigt:
Figur 1: Eine Ansicht auf die Außenseite in Querrichtung einer ersten Ausführungsform des erfindungsgemäßen Schneckenzauns;
Figur 2: Eine Ansicht auf die Stirnseite in Längsrichtung einer zweiten Ausführungsform des erfindungsgemäßen Schneckenzauns.

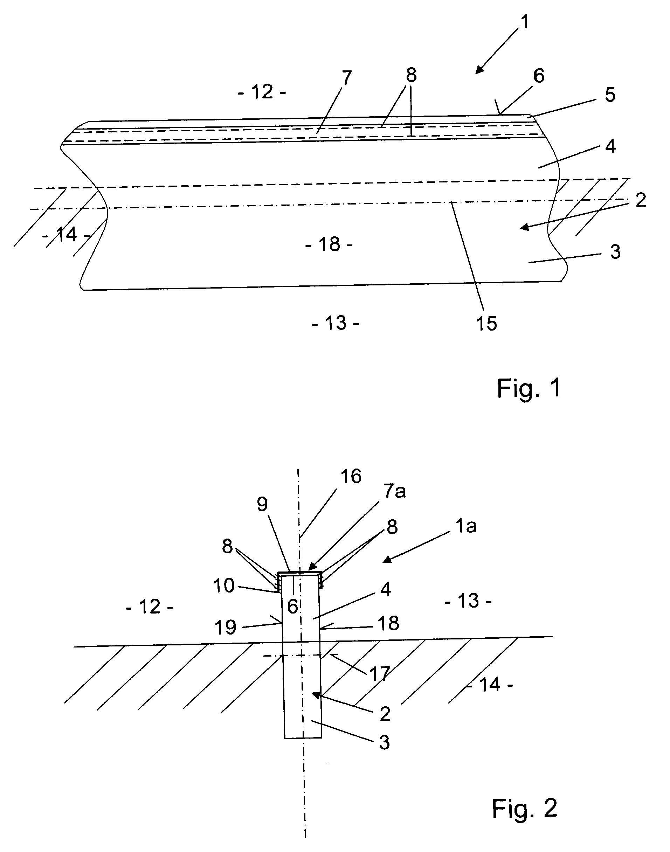

Figuren 1 und 2 zeigen zwei unterschiedliche Schneckenzäune 1 und 1 a nach der Erfindung.

Beide Schneckenzäune 1 und 1 a haben einen Kunststoffträger 2, auf dessen mindestens einer Breitseite 18, 19 im oberen Randbereich 6 ein Kupfer-Folienband 7, 7a aufgebracht ist. Der Kunststoffträger 2 weist einen unteren Einsteckbereich 3 zum Einstecken in das Erdreich 14 auf, an den sich nach oben hin ein oberen Überstandsbereich 4 anschließt, der aus dem Erdreich 14 heraus ragt. Üblich ist der Kunststoffträger 2 in Hochachse 16 etwa 25 cm hoch, wobei ca. 15 cm für den Einsteckbereich 3 und ca. 10 cm für den Überstandsbereich 4 vorgesehen sind, weiterhin in Querachse 17 ca. 1-5 mm dick, sowie in Längsachse 15 in Stücken 1-5 m lang oder aufgewickelt 10-50 m lang.

In Figur 1 ist ein einziges Kupfer-Folienband 7 im oberen Randbereich der äußeren Breitseite 18 des Kunststoffträgers 2 mittels zwei parallelen Längsnähten 8 eines Nähgarnes aufgenäht und zwar auf nur einer Seite des Kunststoffträgers 2, nämlich der äußeren Breitseite 18, die in Richtung dem nicht-abgeschirmten Gartenbereich 13 weist.

In Figur 2 ist ebenfalls ein einziges Kupfer-Folienband 7a im oberen Randbereich des Kunststoffträgers 2 mittels zwei parallelen Längsnähten 8 eines Nähgarnes aufgenäht, jedoch auf beiden Seiten des Kunststoffträgers 2, nämlich auf der äußeren Breitseite 18, die dem nicht-abgeschirmten Gartenbereich 13 zugewandt ist, sowie auch auf der inneren Breitseite 19, die auf zum abgeschirmten Gartenbereich 12 weist.

Das Kupfer-Folienband 7 der ersten Ausführungsform in Figur 1 ist nicht exakt mit der oberen Schmalseite 6 des Kunststoffträgers 2 bündig angenäht, sondern mit Abstand derart, dass noch eine kleine obere Randfläche 5 verbleibt. Dies hat den Vorteil, dass das Annähen erleichtert wird sowie auch eine Beschädigung des Kupfer-Folienbandes 7 verringert wird, da dieses durch die obere Randfläche 5 des Kunststoffträgers 2 von oben her geschützt ist. In anderen Ausführungsformen ist das Kupfer-Folienband 7 jedoch bündig mit dem oberen Schmalseite 6 auf dem Kunststoffträger 2 angenäht.

Das Kupfer-Folienband 7a der zweiten Ausführungsform in Figur 2 besitzt zwei Vertikalschenkel 10, 11 auf beiden Längsseiten des Kunststoffträgers 2, sowie einen diese beiden Vertikalschenkel 10, 11 verbindenden Horizontalschenkel 9, der auf der oberen Schmalseite 6 des Kunststoffträgers 2 lose aufliegt.

Das Kupfer-Folienband 7a ist beidseitig auf dem Kunststoffträger 2 angenäht, durch einen einzigen Nähvorgang, weil die zwei parallelen Längsnähte 8 des Nähgarnes durch das Kupfer-Folienband 7a sowie den Kunststoffträger 2 hindurch genäht sind.

### Zeichnungslegende

- 1.: Schneckenzaun; 1 a
- 2.: Kunststoffträger
- 3.: Einsteckbereich von 2
- 4.: Überstandsbereich von 2
- 5.: obere Randfläche von 2
- 6.: obere Schmalseite von 2
- 7.: Kupfer-Folienband; 7a
- 8.: Nähnaht
- 9.: Horizontschenkel von 7a
- 10.: Vertikalschenkel von 7a
- 11.: Vertikalschenkel von 7a
- 12.: abgeschirmter Gartenbereich
- 13.: nicht-abgeschirmter Gartenbereich
- 14.: Erdreich
- 15.: Längsmittenachse
- 16.: Hochmittenachse
- 17.: Quermittenachse
- 18.: äußere Breitseite von 2 (nicht-abgeschirmter Gartenbereich)
- 19.: innere Breitseite von 2 (abgeschirmter Gartenbereich)

## Patentansprüche

1. Schneckenzaun (1; 1 a) aus einem bandförmigen Kunststoffträger (2), auf dessen Breitseite (18, 19) im Randbereich der oberen Schmalseite (6) mindestens ein Kupfer-Folienband (7; 7a) aufgebracht ist, **dadurch gekennzeichnet, dass** das mindestens eine Kupfer-Folienband (7; 7a) über mindestens eine Nähnaht (8) eines Garnes, z.B. aus Polyester, aufgenäht ist.

2. Schneckenzaun (1; 1 a) nach Anspruch 1, **dadurch gekennzeichnet, dass** das mindestens eine Kupfer-Folienband (7; 7a) aus reinem bzw. nahezu reinem Kupfer oder aber aus einer beliebigen Kupfer-Legierung besteht.

3. Schneckenzaun (1; 1 a) nach Anspruch 2, **dadurch gekennzeichnet, dass** das mindestens eine Kupfer-Folienband (7; 7a) eine Dicke (17) zwischen 0,1 und 0,5 mm und eine Höhe (16) zwischen 10 und 30 mm aufweist.

4. Schneckenzaun (1; 1 a) nach einem der Ansprüche 1-3, **dadurch gekennzeichnet, dass** der Kunststoffträger (2) aus Polyethylen (PE) besteht.

5. Schneckenzaun (1; 1 a) nach einem der Ansprüche 1-4, **dadurch gekennzeichnet, dass** der Kunststoffträger (2) eine Dicke (17) zwischen 0,5 und 5 mm und eine Höhe (16) zwischen 10 und 25 cm aufweist und selbsttragend ist oder aber durch Stützvorrichtungen in Richtung seiner Hochachse (16) gestützt wird.

6. Schneckenzaun (1; 1 a) nach einem der Ansprüche 1-5, **dadurch gekennzeichnet, dass** Schneckenzaun (1; 1 a) in Form einer aufgewickelten Spule zwischen 1 und 50 m vorliegt.

7. Schneckenzaun (1; 1a) nach einem der Ansprüche 1-6, **dadurch gekennzeichnet, dass** mehrere Kupfer-Folienbänder (7; 7a) in geringem Abstand zueinander in Richtung der Hochachse (16) des Kunststoffträgers (2) und/oder in Richtung der Längsachse (15) des Kunststoffträgers (2) aufgenäht sind.

8. Schneckenzaun (1; 1 a) nach einem der Ansprüche 1-7, **dadurch gekennzeichnet, dass** das mindestens eine Kupfer-Folienband (7; 7a) entweder auf der äußeren, d.h. vom abgeschirmten Gartenbereich abgewandten, Breitseite (18) des Kunststoffträgers (2), oder aber auf beiden Breitseiten (18 und 19) des Kunststoffträgers (2), angenäht ist.

9. Schneckenzaun (1; 1 a) nach Anspruch 8, **dadurch gekennzeichnet, dass** das mindestens eine Kupfer-Folienband (7; 7a) u-förmig über die obere Schmalseite (6) gelegt ist und zwei Vertikalschenkel (10, 11) aufweist, welche über einen Horizontalschenkel (9) miteinander verbunden sind, wobei die zwei Vertikalschenkel (10, 11) durch den Kunststoffträger (2) hindurch an diesen angenäht sind.

10. Schneckenzaun (1; 1 a) nach einem der Ansprüche 1-9, **dadurch gekennzeichnet, dass** das mindestens eine Kupfer-Folienband (7; 7a) auf einer Kunststoffträgerfolie (nicht dargestellt) aufgebracht ist, die zusammen an dem Kunststoffträger (2) angenäht sind.
